# NOUVEAU FASCICULE DE BREVET EUROPEEN

(11) **EP 0 359 622 B2**
(45) Date de publication et mention de la décision concernant l'opposition: **28.11.2001**
(45) Mention de la délivrance du brevet: 15.06.1994
(21) Numéro de dépôt: 89402410.8
(22) Date de dépôt: 05.09.1989
(51) Int. Cl.: B32B 27/36, B32B 27/18

(54) **Plaque multicouche à base de polycarbonate protégée contre le rayonnement uv.**
Gegen UV-Strahlung geschützte Verbundplatte aus Polycarbonat
Multilayer plate based on polycarbonate protected against UV radiations

(30) Priorité: 07.09.1988 FR 8811703
(43) Date de publication de la demande: 21.03.1990
(73) Titulaire: KAYSERSBERG PACKAGING (ancienne sté. CHOUANARD), 68240 KAYSERSBERG (FR)
(72) Inventeur: Diemunsch, Robert, F-68000 Colmar (FR); Zeller, Roland, F-68120 Pfastatt (FR)
(74) Mandataire: Dorland, Anne-Marie

(56) Documents cités:
- EP-A- 0 110 221
- EP-A- 0 247 480
- GB-A- 2 028 228
- US-A- 4 707 393

## Description

La présente invention se rapporte à une plaque multicouche en matière plastique protégée contre le rayonnement ultraviolet.

L'invention concerne plus particulièrement une plaque en matière plastique, composée d'une couche de coeur en polycarbonate comportant sur au moins une de ses faces une couche réservoir à base de polycarbonate contenant entre 5 et 15 % en poids d'un agent absorbant le rayonnement UV, elle-même recouverte d'une couche externe en résine synthétique à base de polycarbonate ramifié, de polycarbonate linéaire ou de polyarylate, contenant entre 2 et 15% en poids d'un agent peu volatil absorbant le rayonnement ultraviolet.

De nombreux procédés de fabrication de plaques en matière plastique protégées contre le rayonnement UV ont été décrits dans l'art antérieur.

L'EP-A-0110238, correspondant à l'US-A-4707393, décrit un procédé de fabrication d'un panneau en résine synthétique alvéolaire multicouche par coextrusion à l'aide d'une fllière multicouche composé d'une couche de coeur en polycarbonate alvéolaire portant sur au moins une de ses faces une couche d'obsorption du rayonnément UV en résine synthétique contenant 2 à 15 % en poids d'un agent volatil absorbant le rayonnement UV, elle même recouverte d'une couche externe contenant moins de 2 % en poids d'un agent volatil absorbant le rayonnement UV. Il est indiqué dans la description que la plupart des agents d'absorption du rayonnement UV utilisés habituellement cont volatils en ce sens qu'à une teneur de 0,5 % en poids, il se produit une sublimation perceptible à 260°C sous pression normale et une sublimation plus prononcée sous vide, accompagnée du dépôt de l'agent d'absorption des UV condensé sur les parties plus froides de l'installation (col. 3, I 32-37 de l'US-A-4707393).

De tels panneaux ne sont pas satisfaisants car on observe un vieillissement de la couche externe au cours du temps se manifestant par un jaunissement et l'apparition de microfissures entraînant une baisse des propriétés optiques et mécaniques.

L'EP-A-0110221 décrit un panneau en matière plastique composé d'une couche de coeur en polycarbonate revêtue sur au moins une de ses faces d'une couche de recouvrement en polycarbonate contenant au moins 2 % en poids, de préférence 5 à 15 % en poids, d'un agent d'absorption usuel du rayonnement UV.

Les agents d'absorption du rayonnement UV cités comme étant appropriés dans ce brevet sont les mêmes que ceux de l'EP-A-0110238 qui y sont qualifiés de volatils. Une extraction de ces agents d'absorption du rayonnement UV, qui sont présents en proportion importante dans la couche de recouvrement, se produit dans les conditions de mise en oeuvre du procédé et entraîne le problème crucial de l'encrassement de l'installation et en particulier des plateaux calibrants (plaques alvéolaires) ou des tambours de coulée (plaques pleines) et perturbe la marche de la ligne. Des dépôts et des rayures apparaissent à la surface de la plaque, ce qui constitue un défaut rédhibitoire.

L'EP-A-0247480 décrit du polycarbonate ramifié contenant une hydroxybenzotriazole de structure déterminée, connu d'après le DOS 1670951, lui conférant une protection contre le rayonnement UV. Cette demande décrit également l'emploi d'un et polycarbonate pour la fabrication de panneaux multicouche en matière plastique par coextrusion, la couche de coeur support, composée de préférence de polycarbonate branché, étant recouverte sur au moins une de ses faces, d'une couche d'absorption du rayonnement UV à base de polycarbonate ramifié, contenant entra 1 % en poids et 15 % en poids, de préférence entre 5 % en poids et 15 % en poids, de l'absorbant du rayonnement UV concerné et ayant une épaisseur de 10 à 50 *µ*m (p. 1, I. 15-27, p. 4, I. 20-21 et p. 8, I. 16-29), Cette couche d'absorption du rayonnement UV peut être recouverte d'une autre couche de recouvrement ayant une épaisseur de 10-30 µm et pratiquement exempte d'agents d'absorption du rayonnement UV (p. 8, I. 31-34).

Dans le mode de réalisation où un tel panneau ne comprend pas de couche de recouvrement, il verrait sa protection contre le rayonnement UV se dégrader au cours du temps du fait de la diminution de la concentration en agent anti UV au cours du vieillissement causée par une extraction due aux intempéries ou une dégradation par un processus photochimique. D'autre part, dans le mode de réalisation où ce panneau comprend une couche de recouvrement, qui ne contient pratiquement pas d'agent d'absorption des UV, le vieillissement de cette dernière au cours du temps ne pourrait être évité.

En outre, l'EP-A-247480 ne concerne que le polycarbonate ramifié ; il y est indiqué en effet; et cela est confirmé par l'exèmple comparatif, que les hydroxybenzotriazoles (connus d'après le DOS 1670951) utilisés comme agents d'absorption du rayonnement UV n'apportent une amélioration; par rapport aux hydroxyben-zotriazoles utilisés auparavant, que pour le polycarbonate ramifié, et non pour le polycarbonate linéaire.

Un objet de la présente invention est de fournir une plaque multicouche en matière plastique avec une protection contre le rayonnement UV dont la ou les faces externes sont protégées de façon durable contre le vieillissement.

Un objet de l'invention est encore de fournir une plaque multicouche protégée contre le rayonnement UV dont la fabrication par coextrusion ne provoque pas d'encrassement de l'installation. et notamment pas d'encrassement des plaques de calibrage ou des tambours de coulée ni de dépôt ou de rayure sur les plaques.

Selon la présente invention, il est fourni une plaque, composée. d'une couche -de coeur (âme) en polycarbonate comportant sur au moins une de ses faces une couche réservoir de 5 à 50 *µ*m d'épaisseur à base de polycarbonate contenant entre 5 et 15 % en poids d'un agent volatil d'absorption du rayonnement UV, elle même recouverte d'une couche externe de 5 à 50 µm d'épaisseur en résine synthétique contenant entre 2 et 15 % en poids, d'un agent d'absorption du rayonnement UV peu volatil, différent de celui contenu dans la couche réservoir ladite couche externe étant à base de polycarbone ramifié, de polycarbonate linéaire ou de polyarylate.

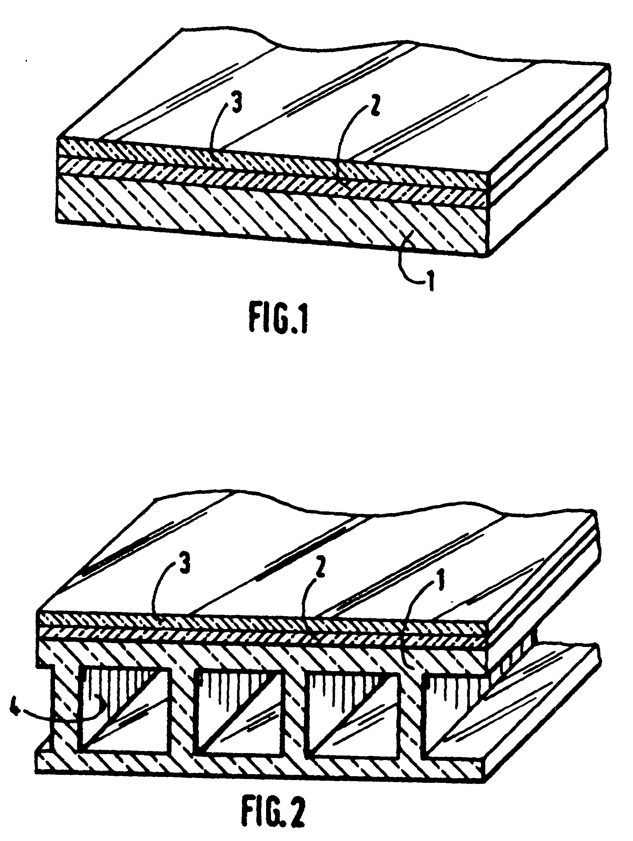

La Figure 1 annexée représente schématiquement une plaque selon l'invention, dans le mode de réalisation où la couche de coeur, en polycarbonate compact, n'est recouverte que sur une de ses faces des couches réservoir et externe.

La Figure 2 annexée représente schématiquement une plaque selon l'invention dans le mode de réalisation où la couche de coeur, en polycarbonate alvéolaire, n'est recouverte que sur une de ses faces des couches réservoir et externe.

La couche de coeur (1), constituant l'âme de la plaque est en polycarbonate alvéolaire, c'est-à-dire comportant des alvéoles (4) ou en polycarbonate compact. La teneur en agent d'absorption du rayonnement UV de cette couche est faible.
La couche réservoir (2) qui recouvre la couche de coeur (1) sur au moins une de ses faces est à base de polycarbonate linéaire ou ramifié. Elle a une teneur en agent d'absorption du rayonnement UV élevée : de 5 % à 15 % en poids et plus généralement de 7 % à 12 % en poids L'épaisseur de la couche réservoir est de 5 à 50 µm. Elle doit être suffisante pour absorber le rayonnement UV qui ne serait pas totalement filtré par la couche externe.

Les agents d'absorption dû rayonnement UV contenus dans la couche réservoir sont destinés à assurer la protection de la plaque par suite de leur migration vers la surface. Ils compensent ainsi la. baisse dé l'efficacité des agents d'absorption du rayonnement UV de la couche externe du fait de leur extraction lors de l'exposition de la plaque aux intempéries où de teur dégradation par un processus photochimique. Les agents d'absorption du rayonnement UV de la couche réservoir sont des produits usuels, par exemple des hydroxybenzotriazoles de formule : 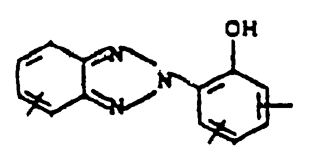 parmi lesquels on peut citer les produits commercialisés sous les marques. Tinuvin 350. Cyasorb 5411 et Tinuvin 234.

Ces produits peuvent être utilisés seuls ou en combinaison. La couche externe (3) recouvrant la couche réservoir (2) est une résine synthétique à base de polycarbonate ramifié, de polycarbonate linéaire ou de polyarylate, par exemple de type ARDEL D 240 (marque déposée). La couche externe assure la protection de la plaque contre le rayonnement UV. Son épaisseur est faible mais suffisante pour réguler la migration des agents d'absorption du rayonnement UV volatils contenus dans la couche réservoir jusqu'à la surface de la plaque. Une épaisseur de 5 à 50*µ*m est donc appropriée. La teneur en agent d'absorption du rayonnement UV de la couche externe doit être supérieure à 2 % en poids, et comprise entre 2 et 15 % en poids.

Les agents d'absorption du rayonnement UV utilisés pour la couche externe sont caractérisés par le fait qu'ils sont peu volatils.

Les agents anti-UV utilisés dans la couche externe doivent répondre aux critères suivants :
- efficacité moléculaire équivalente à celle des agents anti-UV couramment utilisés pour le polycarbonate,
- faible volatilité aux températures de mise en oeuvre du polycarbonate.

Les agents anti-UV utilisés dans la couche externe sont donc différents de ceux utilisés dans la couche réservoir.

La volatilité du produit anti-UV peut être déterminée par une analyse thermogravimétrique effectuée sur l'agent anti UV pur avec une montée en température de 10°C/minute sous balayage d'argon. Le produit est considéré comme peu volatil si la température correspondant à une perte de poids de 1 % est supérieure à 300°C. De tels produits sont par exemple des benzotriazoles tels que décrits dans le DOS 1670951.

Parmi les anti-UV utilisables selon la présente invention pour la couche externe on peut citer le produit commercialisé par la Société ADEKA ARGUS sous la marque LSBT 620 et ayant la formule : 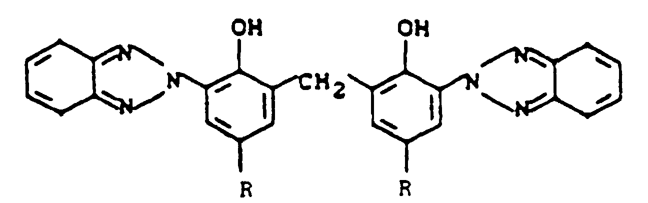 où R est le groupement

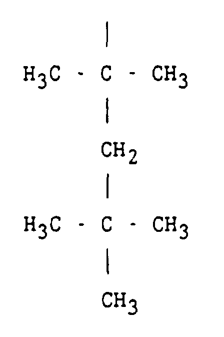

Ces produits peuvent être utilisés seuls ou en combinaison.

La présente invention répond donc aux objets sus-mentionnés et fournit des plaques multicouches en matière plastique avec une protection contre le rayonnement UV assurée par 2 agents anti UV différents. L'agent anti UV contenu dans la couche externe, peu volatil, évite le vieillissement de la surface de la plaque. L'agent anti UV contenu dans la couche réservoir est un produit couramment utilisé pour la stabilisation du polycarbonate. Du fait de sa migration vers la surface, il permet de compenser la perte par extraction ou photodégradation de l'agent anti UV contenu dans la couche externe. De ce fait, la, ou les surfaces de la plaque, sont protégées de façon durable contre le vieillissement.

La présente invention fournit également un procédé de fabrication des plaques revendiquées.

Selon l'invention, on effectue un procédé de coextrusion d'un flux en trois couches dans lequel ladite couche réservoir et ladite couche externe, chargées comme indiqué plus haut, en lesdits agents d'absorption du rayonnement UV, sont déposées simultanément sur ladite couche de coeur au moyen d'un bloc de coextrusion, souvent désigné dans la technique sous l'appellation "feed-block".
Le procédé utilisé dans la présente invention consiste à rassembler les trois flux de matière dans le bloc de coextrusion, puis à conduire le courant unique jusqu'à la filière où il est réparti sur l'ensemble de la laize. La même structure de la plaque peut être obtenue en utilisant une filière multicouche.
Dans le cas d'une plaque alvéolaire, la matière est calibrée sous vide à l'aide d'un conformateur à la sortie de la filière. La présente invention, prévoyant la présence d'un agent d'absorption du rayonnement UV peu volatil dans la couche externe, permet d'éviter toute perturbation de la bonne marche du procédé, ainsi que l'encrassement du calibre.
Dans le cas d'une plaque pleine, la très faible volatilité de l'agent d'absorption du rayonnement UV dans la couche externe, selon l'invention, permet d'éviter les dépôts sur les tambours de coulée.

## Revendications

1. Plaque en matière plastique composée d'une couche de coeur en polycarbonate portant sur au moins une de ses faces une couche réservoir à base de polycarbonate de 5 à 50 µm d'épaisseur, contenant entre 5 et 15 % en poids d'un agent volatil d'absorption du rayonnement ultraviolet, elle même recouverte d'une couche externe de 5 à 50 µm d'épaisseur en résine synthétique contenant un agent d'absorption du rayonnement ultraviolet, **caractérisée en ce que** ledit agent d'absorption du rayonnement ultraviolet de ladite couche externe, différent de celui de ladite couche réservoir, est peu volatil et y est présent à une teneur comprise entre 2 et 15 % en poids, et **en ce que** ladite couche externe est à base de polycarbonate ramifié, de polycarbonate linéaire ou de polyarylate.

## Patentansprüche

1. Platte aus Kunststoff, zusammengesetzt aus einer Kernschicht aus Polycarbonat, die auf zumindest einer ihrer Flächen eine Speicherschicht auf der Basis von Polycarbonat mit 5 bis 50 µm Dicke trägt, die zwischen 5 und 15 Gew.-% eines flüchtigen Absorptionsmittels für ultraviolette Strahlen enthält, die selbst von einer äußeren Schicht von 5 bis 50 µm Dicke aus Kunstharz bedeckt ist, welche ein Mittel zur Absorption ultravioletter Strahlung enthält, **dadurch gekennzeichnet, daß** das Mittel zur Absorption ultravioletter Strahlung der äußeren Schicht, abweichend von demjenigen der Speicherschicht, weniger flüchtig und darin in einem Gehalt zwischen 2 und 15 Gew.-% enthalten ist, und daß die äußere Schicht auf der Basis von verzweigtem Polycarbonat, linearem Polycarbonat oder Polyarylat ist.

## Claims

1. Sheet made of plastic material consisting of a core layer made of polycarbonate having on at least one of its surfaces a reservoir layer 5 to 50 µm thick based on polycarbonate containing between 5 and 15% by weight of a volatile ultraviolet radiation absorbing agent, itself covered by an outer layer 5 to 50 µm thick made of synthetic resin containing an ultraviolet radiation absorbing agent, **characterized in that** the said ultraviolet radiation absorbing agent in the said outer layer, different from that in the said reservoir layer, has low volatility and is present in a concentration of between 2 and 15 % by weight, and **in that** the said outer layer is based on branched polycarbonate, linear polycarbonate or polyarylate.
